# EUROPÄISCHE PATENTSCHRIFT

(11) **EP 2 225 041 B1**
(45) Veröffentlichungstag und Bekanntmachung des Hinweises auf die Patenterteilung: **26.07.2017**
(21) Anmeldenummer: 08860565.4
(22) Anmeldetag: 25.11.2008
(51) Int. Cl.: B04B 9/04, B04B 9/12, B04B 15/00

(54) **SEPARATOR MIT EINEM DIREKTANTRIEB**
SEPARATOR COMPRISING A DIRECT DRIVE
SÉPARATEUR À ENTRAÎNEMENT DIRECT

(30) Priorität: 13.12.2007 DE 102007060588
(43) Veröffentlichungstag der Anmeldung: 08.09.2010
(73) Patentinhaber: GEA Mechanical Equipment GmbH, 59302 Oelde (DE)
(72) Erfinder: MACKEL, Wilfried, 59510 Lippetal-Herzfeld (DE); BATHELT, Thomas, 59302 Oelde (DE); PENKL, Andreas, 59510 Lippetal (DE); KLEIMANN, Thomas, 59302 Oelde (DE); SEDLER, Marie-Theres, 59329 Wadersloh (DE)
(74) Vertreter: Specht, Peter
(86) Internationale Anmeldenummer: PCT/EP2008/066166
(87) Internationale Veröffentlichungsnummer: WO 2009/074451

(56) Entgegenhaltungen:
- WO-A-00/78465
- DE-A1-102006 011 895
- DE-C1- 4 314 440
- DE-U1-202005 001 539
- GB-A- 344 224
- US-A- 5 051 007

## Beschreibung

Die Erfindung betrifft einen Separator nach dem Oberbegriff des Anspruchs 1.

Derartige, insbesondere für einen industriellen Einsatz im kontinuierlichen Betrieb geeignete Separatoren, sind aus dem Stand der Technik an sich bekannt. Unter den bekannten Systemen gibt es Konstruktionen, bei denen die Trommel, die Antriebsspindel und der elektrische Antriebsmotor starr zu einer baulichen Einheit verbunden sind, welche dann als Ganzes elastisch an einem Maschinengestell abgestützt ist Beispiele eines derartigen Standes der Technik offenbaren die FR 1.287.551, die DAS 1 057 979 und die DE 43 14 440 C1.

Zum Stand der Technik werden zudem die DE 198 13 436 A1, die gattungsgemäße GB 344 224 A, aus der eine Antriebsspindel für die Schleudertrommel bekannt ist, die mittels einer Lagerung drehbar in einem Gehäuse gelagert ist, welches elastisch an einem Maschinengestell abgestützt ist, die WO 00/78 465 A1 und die US 64 28 460 A1 genannt.

Aus der WO 2007/125066 A1 ist zudem ein Separator mit einem Direktantrieb bekannt, dessen Antriebsvorrichtung einen elektrischen Antriebsmotor mit einem Stator und einen Motorläufer aufweist, welcher mit der Antriebsspindel fluchtet, wobei der Stator starr mit dem Maschinengestell verbunden ist und der Motorläufer, die Antriebsspindel die Schleudertrommel und das Gehäuse eine elastisch an dem Maschinengestell abgestützte, im Betrieb schwingende Einheit bilden.

Die Erfindung hat vor dem Hintergrund der gattunsgemäßen GB 344 224 A die Auf gabe, den Aufbau von Separatoren mit einem Direktantrieb zu verbessern.

Die Erfindung erreicht dieses Ziel durch den Gegenstand des Anspruchs 1.

Derart wird der Motor in geeigneter Weise - insbesondere in radialer Richtung - fixiert, wobei er aber insbesondere die im Betrieb auftretenden axialen Bewegungen der Antriebsspindel mit vollziehen kann.

Dabei ist die Steifigkeit der Gelenkelement(e) im Einbauzustand in axialer - vertikaler - Richtung weniger als halb so groß als die Steifigkeit in radialer Richtung, um in besonders vorteilhafter Weise ein Mitbewegen in axialer Richtung sicherzustellen.

Dies lässt sich erfindungsgemäß dadurch auf einfache Weise realisieren, dass das oder die Gelenkelemente als Blechteile ausgebildet sind.

So ist es denkbar, als Gelenkelement eine Blechringscheibe vorzusehen oder mehrere umfangsverteilte Ringsegmente oder Blechstreifen. Derartige Blechelemente sind kostengünstig und auf einfache Weise in die Konstruktion integrierbar.

Nachfolgend wird die Erfindung anhand eines Ausführungsbeispiels unter Bezug auf die Zeichnung näher beschrieben. Es zeigt:

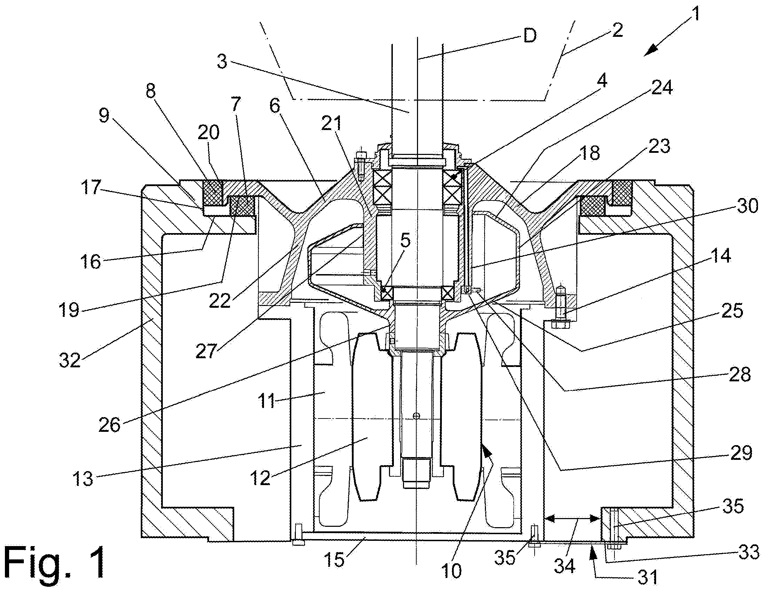

- Fig. 1: eine Schnittansicht eines schematisiert dargestellten erfindungsgemäßen Antriebsbereichs eines Separators, in die zur Veranschaulichung rechts und links der Drehachse verschiedene Varianten von Schmierstoffbehältern eingezeichnet sind.

Fig. 1 zeigt einen Separator 1 mit einer hier nur schematisch angedeuteten Schleudertrommel 2 mit vertikaler Drehachse D. Die Schleudertrommel 2 ist auf eine Antriebsspindel 3 aufgesetzt. Die Antriebsspindel 3 ist mit einer Lagerung, die hier ein (oberes Lager) Halslager 4 und ein (unteres Lager) Fußlager 5 umfasst, drehbar in einem Gehäuse 6 gelagert. Beispielhaft weist das Halslager 4 hier zwei Wälzlager auf. Andere Ausgestaltungen beispielsweise mit nur einem Wälzlager als Halslager 4 wären denkbar (hier nicht dargestellt). Es wäre ferner auch denkbar, zwei Fußlager 5 vorzusehen.

Das Gehäuse 6 ist mittels elastischen Elementen 7, 8, vorzugsweise mittels Gummielemente oder Gummiringen, an einem Maschinengestellringabschnitt 9 abgestützt, der als separates oder integriertes Teil eines übergeordneten Maschinengestells 32 ausgelegt ist, in welches die Antriebsspindel 3 hineinragt.

Zum Antrieb der Schleudertrommel 2 dient ein Separatorantrieb mit einem (Elektro-)Motor 10, der ein Motorgehäuse 13 mit einem Stator 11 bzw. einer Ständerwicklung und einen Motorläufer 12 aufweist.

Die Antriebsspindel 3 ist direkt - d.h. vorzugsweise ohne zwischengeschaltete Elemente wie eine Kupplung - mit dem Motorläufer 12 verbunden. Das Motorgehäuse 13 mit dem Stator 11 ist an das Gehäuse 6 angesetzt, was hier dadurch realisiert wird, dass das Motorgehäuse 13 direkt unten an das Gehäuse 6 mit Schrauben 14 oder Bolzen oder dgl. angeschraubt ist. Das Motorgehäuse weist eine untere Abdeckung 15 auf.

Die Lagereinrichtung ist axial zwischen dem Motor 10 und der Schleudertrommel 2 angeordnet.

Die elastischen Elemente umfassen umfangsverteilt mehrere Anordnungen aus jeweils vorzugsweise je zwei elastischen Elementen - vorzugsweise Gummielementen - 7, 8, die senkrecht zueinander ausgerichtet sind, wodurch sich eine besonders definierte Einstellung des Gelenkpunktes bzw. Drehpunktes ergibt. Die gewählte Anordnung bietet den Vorteil einer guten und leichten Möglichkeit zur Abstimmung der Federeigenschaften durch Variation von Ort und Auslegung der elastischen Elemente.

Die Anordnung der vorzugsweise Paare von elastischen Elementen 7, 8 ist derart gewählt, dass die ersten Elemente 7 Mittelängsachsen aufweisen, die parallel zur Drehachse ausgerichtet sind und die zweiten elastischen Elemente 8 Längsachsen, die senkrecht zur Drehachse (radial) ausgerichtet sind.

Der Maschinengestellabschnitt 9 weist eine gestufte Form mit Wandabschnitten 16, 17 auf, an denen sich die elastischen Elemente 7, 8 abstützen.

Es ist auch denkbar, umlaufende Gummiringe als die elastischen Elemente 7, 8 vorzusehen.

Das Gehäuse 6 weist einen oberen flanschartigen Bereich 18 auf, an dessen Unterseite 19 und an dessen Außenumfang 20 sich die elastischen Elemente 7, 8 auf ihren vom Maschinengestellabschnitt 9 abgewandten Seiten abstützen.

An den flanschartigen Bereich 18 schließt sich innen ein axial nach unten hin erstreckender zylindrischen Gehäusebereich 21 an, der die Antriebsspindel 3 umgibt. Das Hals- und das Fußlager 4, 5 sind zwischen dem Innenumfang des Gehäusebereiches 21 und dem Außenumfang der Antriebsspindel 3 beabstandet angeordnet.

Radial weiter außen weist das Gehäuse 6 einen sich nach unten hin an den flanschartigen Bereich anschließenden, sich aufweitenden Kragen 22 auf.

In dem nach oben und radial nach außen hin von dem Gehäusekragen 22 sowie nach unten hin von dem Läufers des Motors 10 und nach innen hin von dem Gehäusebereich 21 und - weiter unten - von der Antriebspindel 3 begrenzten Raum ist ein ringraum-/torusartiger Schmiermittel-Sammelbehälter 23 angeordnet, der nach oben hin und nach unten sich verjüngende Begrenzungswände 24, 25 aufweist.

Der Schmiermittel-Sammelbehälter 23 ist in seinem unteren Bereich mit der Antriebsspindel 3 in einem Bereich 26 drehfest verbunden, so dass sich in ihm im Betrieb Öl radial außen sammelt. Nach oben hin liegt er dicht nahezu an dem Gehäuse an, er ist aber relativ zu dem Gehäuse 6 drehbar.

Der Schmiermittel-Sammelbehälter 23 kann an dieser Stelle hervorragend als mitrotierendes Element in die Konstruktion integriert werden und dabei dennoch ein vorteilhaft großes Volumen aufweisen.

Rechts der Drehachse D ist dabei beispielhaft ein vertikal etwas höherer und ggf. radial etwas kürzerer Schmiermittel-Behälter 23 dargestellt als links der Drehachse D. Bevorzugt wird dieser Behälter 23 rotationssymmetrisch ausgelegt.

In den unteren Bereich des Schmiermittel-Sammelbehälters ragt als Mittel zur Förderung von Öl hier in vorteilhafter Ausgestaltung ein rohr- oder schlauchartiger Ansatz 28, der derart angeordnet und ausgelegt ist, dass er im Betrieb in das außen im Schmiermittel-Sammelbehälter gesammelte Schmiermittel - z.B. ein Öl - eintaucht. Der Ansatz 28 ragt in eine radiale Bohrung 29 im Gehäuse 6, die in einen sich axial bis in den Bereich oberhalb des Halslagers erstreckenden Schmiermittelkanal 30 übergeht. Diese schälscheibenartige Anordnung dient dazu, das Schmiermittel aus dem Schmiermittel-Sammelbehälter 23 in den Bereich zwischen dem Innenumfang des Gehäuses 6 und dem Außenumfang der Antriebsspindel 3 oberhalb des Halslagers 4 zu fördern.

Zur besseren Führung kann das Rohr 24 auch entgegen der Drehrichtung gebogen sein.

Bei Drehungen der Antriebspindel 3 wird Öl nach außen geführt und am Ölspiegel OIL durch den Schmiermittelkanal 30 nach oben gepumpt.

Aus dem Schmiermittelkanal 30 austretendes Schmiermittel kann sodann nach unten hin durch das Hals- und das Fußlager 4, 5 laufen und von dort nach unten hin zurück in den Schmiermittel-Sammelbehälter 23.

Derart wird auf engstem Raum ein definiert auslegbarer und sicher arbeitender, vollständiger Schmiermittelkreislauf zur Schmierung der Lagerung der Antriebsspindel 3 realisiert. Der Bereich des Antriebsmotors 10 ist auf einfache Weise von dem Schmiermittelsystem bzw. -kreislauf getrennt. Der Antriebsbereich unterhalb der Lagerung 4, 5 hat nur eine minimale vertikale Erstreckung.

Der rotierende Schmiermittel-Sammelbehälter 21 bietet auch den Vorteil, dass sich mit ihm gut Wärme nach außen ableiten lässt. Auch Mittel zur Oberflächenvergrößerung wie Kühlrippen und Förderrippen lassen sich innen oder außen an dem Behälter integrieren.

Da die gesamte Antriebsvorrichtung mit dem Motorgehäuse 13 im Betrieb als mitbewegte und -schwingende Einheit Bewegungen der Antriebsspindel 3 mitführt, wird vorgeschlagen, die Antriebsvorrichtung unterhalb der Lagerung, insbesondere an ihrem unteren axialen Ende - über wenigstens eines oder mehrere elastische Gelenkelemente 31 mit dem Maschinengestell 32 zu verbinden, an dem der Maschinengestellabschnitt 9 angeordnet oder ausgebildet ist.

Als das wenigstens eine oder die mehreren Gelenkelement(e) 31 werden hier Blechstreifen 33 verwendet, die radial ausgerichtet sowie umfangsverteilt angeordnet werden. Dabei liegt die Haupterstreckungsebene der ebenen Blechelemente senkrecht zur Drehachse. Die Blechstreifen 33 überbrücken den Spalt 34 zwischen dem Motor, insbesondere dem Antriebsgehäuse 13 und dem Maschinengestell 32 und fixieren das untere Motorende in geeigneter Weise in radialer Richtung. Sie können mit Bolzen oder Schrauben 35 an dem Antriebsgehäuse 13 und dem Maschinengestell 32 befestigt sein.

Zur Kühlung könnte ferner beispielsweise die untere Abdeckung eine oder mehrere Öffnungen aufweisen und es könnte eine weitere Öffnung im Bereich des Gehäuses 6 oder Maschinengestells oberhalb des Motors vorgesehen sein, so dass im Betrieb ventilatorartig ein Luftstrom am Motor vorbei entsteht. In der Abdeckung würde für die Öffnungen ein Durchmesser gewählt, der kleiner ist als der Außendurchmesser des Sammelbehälters, um eine ventilatorartige Kühlwirkung zu erzielen. Eine Verrippung auf dem Sammelbehälter 22, z.B. unten, würde diesen Effekt noch verstärken.

Es wäre auch denkbar, in das Motorgehäuse oder an anderer geeigneter Stelle einen Kühlkreislauf für ein Fluid zu integrieren. In der Abdeckung würde man für die Öffnungen einen Durchmesser wählen, der kleiner ist als der Außendurchmesser des Sammelbehälters, um eine ventilatorartige Kühlwirkung zu erzielen.

### Bezugszeichen

- Separator: 1
- Schleudertrommel: 2
- Antriebsspindel: 3
- Halslager: 4
- Fußlager: 5
- Gehäuse: 6
- elastische Elemente: 7, 8
- Maschinengestellabschnitt: 9
- Motor: 10
- Motorgehäuse: 13
- Stator: 11
- Motorläufer: 12
- Schrauben: 14
- Abdeckung: 15
- Wandabschnitte: 16, 17
- flanschartiger Bereich: 18
- Unterseite: 19
- Außenumfang: 20
- Gehäusebereich: 21
- Kragen: 22
- Schmiermittel-Sammelbehälter: 23
- Begrenzungswände: 24, 25
- Bereich: 26
- Ansatz: 28
- Bohrung: 29
- Schmiermittelkanal: 30
- Gelenkelemente: 31
- Maschinengestell: 32
- Blechstreifen: 33
- Spalt: 34
- Schrauben: 35
- Drehachse: D

## Patentansprüche

1. Separator (1), der folgendes aufweist:
a. eine Schleudertrommel (2) mit vertikaler Drehachse (D) und einer Zulaufleitung für ein zu verarbeitendes Schleudergut,
b. eine Antriebsspindel (3) für die Schleudertrommel, die mittels einer Lagerung drehbar in einem Gehäuse (6) gelagert ist, welches elastisch an einem Maschinengestell (8) abgestützt ist,
c. eine Antriebsvorrichtung mit einem elektrischen Antriebsmotor (10), der einen Stator (11) und einen Motorläufer (12) aufweist, welcher mit der Antriebsspindel (3) fluchtet, wobei die Antriebsvorrichtung mit dem Motorgehäuse (13) im Betrieb als mitschwingende Einheit die Bewegungen der Antriebsspindel (3) mit vollzieht,
d. die Antriebsvorrichtung unterhalb der Lagerung - insbesondere an ihrem unteren axialen Ende - über wenigstens eines oder mehrere Gelenkelement(e) (31) mit dem Maschinengestell (32) verbunden ist,
e. wobei die Steifigkeit des/der Gelenkelement(e) (31) bezogen auf die Drehachse (D) im Einbauzustand in axialer - vertikaler - Richtung kleiner ist als die Steifigkeit in radialer Richtung,
**dadurch gekennzeichnet, dass**
f. die Steifigkeit des/der Gelenkelement(e) 31 im Einbauzustand in axialer Richtung weniger als halb so groß ist als die Steifigkeit in radialer Richtung, wobei die Gelenkelemente (31) als ebene Blechteile ausgebildet ist/sind.

2. Separator nach einem der vorstehenden Ansprüche, **dadurch gekennzeichnet, dass** die Blechteile den Spalt (34) zwischen dem Motor (10) und dem Maschinengestell (32) überbrücken.

3. Separator nach einem der vorstehenden Ansprüche, **dadurch gekennzeichnet, dass** das Gelenkelement (31) als Blechringscheibe ausgebildet ist.

4. Separator nach einem der vorstehenden Ansprüche, **dadurch gekennzeichnet, dass** die Gelenkelemente (31) als Blechringsegmente ausgebildet sind.

5. Separator nach einem der vorstehenden Ansprüche, **dadurch gekennzeichnet, dass** die Gelenkelemente (31) als umfangsverteilte Blechstreifen (33) ausgebildet sind.

6. Separator nach einem der vorstehenden Ansprüche, **dadurch gekennzeichnet, dass** die ebenen Blechelemente (31) senkrecht zur Drehachse (D) ausgerichtet sind.

7. Separator nach einem der vorstehenden Ansprüche, **gekennzeichnet durch** ein Schmiermittelsystem zur Schmierung der Lagerung, das als Schmiermit telkreislauf ausgebildet ist und einen Schmiermittel-Sammelbehälter (23) aufweist, wobei der gesamte Schmiermittelkreislauf mit dem Schmiermittel-sammelbehälter (23) axial oberhalb des Läufers des elektrischen Antriebsmotors (10) angeordnet ist.

8. Separator nach Anspruch 7, **dadurch gekennzeichnet, dass** die der Schmiermittel-Sammelbehälter (23) ringraumartig/torusartig die Antriebsspindel (3) umgibt

9. Separator (1) nach einem der vorstehenden Ansprüche 7 oder 8, **dadurch gekennzeichnet, dass** der Schmiermittel-Sammelbehälter (23) einfach oder doppelt konisch ausgebildet ist.

10. Separator (1) nach einem der vorstehenden Ansprüche 7 bis 10, **dadurch gekennzeichnet, dass** der Schmiermittel-Sammelbehälter (23) als sich im Betrieb mit der Antriebsspindel (3) mitrotierendes Element ausgebildet ist.

11. Separator (1) nach Anspruch 10, **dadurch gekennzeichnet, dass** der Schmiermittel-Sammelbehälter (23) drehfest mit der Antriebspindel (3) verbunden ist.

12. Separator (1) nach einem der vorstehenden Ansprüche 7 bis 12, **dadurch gekennzeichnet, dass** in den Schmiermittel-Sammelbehälter (21) als Mittel zur Förderung von Schmierstoff ein Förderorgan für das Schmiermittel taucht.

13. Separator (1) nach Anspruch 12, **dadurch gekennzeichnet, dass** das Förderorgan dazu dient, das Schmiermittel aus dem Schmiermittel-Sammelbehälter (23) schälscheibenartig in den Bereich zwischen dem Innenumfang des Gehäuses (6) und dem Außenumfang der Antriebsspindel (3) oberhalb der Lagerung zu fördern, von wo es nach unten hin durch die Lagerung und von dort nach unten hin zurück in den Schmiermittel-Sammelraum (23) läuft.

14. Separator (1) nach einem der vorstehenden Ansprüche, **dadurch gekennzeichnet, dass** das Gehäuse (6) mittels elastischen Elementen (7, 8), vorzugsweise mittels Gummielementen, an einem Maschinengestell abgestützt ist.

15. Separator (1) nach Anspruch 14, **dadurch gekennzeichnet, dass** die elastischen Elemente (7, 8) umfangsverteilt mehrere paarweise Anordnungen aus jeweils zwei elastischen Elementen (7, 8) aufweisen, die senkrecht zueinander ausgerichtet sind.

16. Separator (1) nach einem der vorstehenden Ansprüche 14 oder 15, **dadurch gekennzeichnet, dass** die elastischen Elemente (7, 8) zwei Gummiringe aufweisen, die senkrecht zueinander ausgerichtet sind.

## Claims

1. A separator (1) which has the following:
a. a centrifugal drum (2) with a vertical axis of rotation (D) and a feed line for a material which is to be centrifuged and processed,
b. a driving spindle (3) for the centrifugal drum, said driving spindle being mounted rotatably by means of a bearing in a housing (6) which is supported elastically on a machine frame (8),
c. a driving device with an electric driving motor (10) which has a stator (11) and a motor armature (12) which is aligned with the driving spindle (3), wherein the driving device together with the motor housing (13) carries out the same movements as the driving spindle (3) as a co-vibrating unit during operation,
d. the driving device is connected to the machine frame (32) below the bearing - in particular at the lower axial end thereof - via at least one or more joint elements (31),
e. the stiffness of the joint element(s) (31) with respect to the axis of rotation (D) in the installed state being smaller in the axial - vertical - direction than the stiffness in the radial direction,
**characterized in that**
f. the stiffness of the joint element(s) (31) in the installed state being less than half the size in the axial direction than the stiffness in the radial direction, wherein the joint elements (31) is/are designed as planar sheet-metal parts.

2. The separator as claimed in one of the preceding claims, **characterized in that** the sheet-metal parts bridge the gap (34) between the motor (10) and the machine frame (32).

3. The separator as claimed in one of the preceding claims, **characterized in that** the joint element (31) is designed as an annular sheet-metal disk.

4. The separator as claimed in one of the preceding claims, **characterized in that** the joint elements (31) are designed as annular sheet-metal segments.

5. The separator as claimed in one of the preceding claims, **characterized in that** the joint elements (31) are designed as circumferentially distributed sheet-metal strips (33).

6. The separator as claimed in one of the preceding claims, **characterized in that** the planar sheet-metal elements (31) are oriented perpendicularly to the axis of rotation (D).

7. The separator as claimed in one of the preceding claims, **characterized by** a lubricant system for lubricating the bearing, which lubricant system is designed as a lubricant circuit and has a lubricant collecting container (23), wherein the entire lubricant circuit together with the lubricant collecting container (23) is arranged axially above the armature of the electric driving motor (10).

8. The separator as claimed in claim 7, **characterized in that** the lubricant collecting container (23) surrounds the driving spindle (3) in the manner of an annular space/in the manner of a torus.

9. The separator (1) as claimed in one of the preceding claims 7 or 8, **characterized in that** the lubricant collecting container (23) is designed to have one or two cones.

10. The separator (1) as claimed in one of the preceding claims 7 to 10, **characterized in that** the lubricant collecting container (23) is designed as an element which rotates together with the driving spindle (3) during operation.

11. The separator (1) as claimed in claim 10, **characterized in that** the lubricant collecting container (23) is connected to the driving spindle (3) in a rotationally fixed manner.

12. The separator (1) as claimed in one of the preceding claims 7 to 12, **characterized in that** a conveying member for the lubricant dips into the lubricant collecting container (23) as a lubricant conveying means.

13. The separator (1) as claimed in claim 12, **characterized in that** the conveying member serves to convey the lubricant out of the lubricant collecting container (23) in the manner of a stripping disk into the region between the inner circumference of the housing (6) and the outer circumference of the driving spindle (3) above the bearing from where said lubricant runs downward through the bearing and downward from there back into the lubricant collecting space (23).

14. The separator (1) as claimed in one of the preceding claims, **characterized in that** the housing (6) is supported on a machine frame by means of elastic elements (7, 8), preferably by means of rubber elements.

15. The separator (1) as claimed in claim 14, **characterized in that** the elastic elements (7, 8) have a plurality of paired arrangements of in each case two elastic elements (7, 8) which are oriented perpendicularly to each other distributed around the circumference.

16. The separator (1) as claimed in one of the preceding claims 14 or 15, **characterized in that** the elastic elements (7, 8) have two rubber rings which are oriented perpendicularly to each other.

## Revendications

1. Séparateur (1) comprenant :
a. un tambour de centrifugation (2) avec un axe de rotation (D) et une conduite d'arrivée pour une matière à centrifuger,
b. une broche d'entraînement (3) pour le tambour de centrifugation, supportée avec possibilité de rotation par un palier dans un boîtier (6) qui s'appuie de façon élastique sur un bâti de machine (8),
e. un dispositif d'entraînement avec un moteur d'entraînement électrique (10), qui présente un stator (11) et un rotor de moteur (12) aligné avec la broche d'entraînement (3), lequel dispositif d'entraînement effectue les mêmes mouvements que la broche d'entraînement (3) avec le carter du moteur (13) en fonctionnement en formant une unité associée en vibration,
d. le dispositif d'entraînement étant relié en dessous du palier, en particulier à son extrémité axiale inférieure, au bâti de machine (32) par au moins un ou plusieurs éléments d'articulation (31),
e. la rigidité du ou des éléments d'articulation (31) par rapport à l'axe de rotation (D) dans l'état monté étant plus petite dans le sens axial ou vertical que la rigidité dans le sens radial,
**caractérisé en ce que**
f. la rigidité du ou des éléments d'articulation (31) dans l'état monté est au moins deux fois plus faible dans le sens axial que la rigidité dans le sens radial, les éléments d'articulation (31) étant réalisés comme des pièces plates en tôle.

2. Séparateur selon l'une des revendications précédentes, **caractérisé en ce que** les pièces en tôle franchissent l'interstice (34) entre le moteur (10) et le bâti de machine (32).

3. Séparateur selon l'une des revendications précédentes, **caractérisé en ce que** l'élément d'articulation (31) est conformé comme une rondelle annulaire en tôle.

4. Séparateur selon l'une des revendications précédentes, **caractérisé en ce que** les éléments d'articulation (31) sont conformés comme des segments d'anneau en tôle.

5. Séparateur selon l'une des revendications précédentes, **caractérisé en ce que** les éléments d'articulation (31) sont conformés comme des bandes de tôle (33) réparties sur la circonférence.

6. Séparateur selon l'une des revendications précédentes, **caractérisé en ce que** les éléments en tôle plats (31) sont orientés perpendiculairement à l'axe de rotation (D).

7. Séparateur selon l'une des revendications précédentes, **caractérisé en ce qu'**il comporte un système de lubrification pour la lubrification du palier, qui est conçu comme un circuit de lubrifiant et qui présente un bac collecteur de lubrifiant (23), l'ensemble du circuit de lubrifiant étant disposé avec le bac collecteur de lubrifiant (23) au-dessus du rotor du moteur d'entraînement électrique (10) dans le sens axial.

8. Séparateur selon la revendication 7, **caractérisé en ce que** le bac collecteur de lubrifiant (23) entoure la broche d'entraînement (3) en formant un espace annulaire ou toroïdal.

9. Séparateur (1) selon l'une des revendications 7 ou 8, **caractérisé en ce que** le bac collecteur de lubrifiant (23) est en forme de simple ou de double cône.

10. Séparateur (1) selon l'une des revendications 7 à 10, **caractérisé en ce que** le bac collecteur de lubrifiant (23) est conformé comme un élément qui tourne avec la broche d'entraînement (3) en fonctionnement.

11. Séparateur (1) selon la revendication 10, **caractérisé en ce que** le bac collecteur de lubrifiant (23) est relié à la broche d'entraînement (3) de manière solidaire en rotation.

12. Séparateur (1) selon l'une des revendications 7 à 12, **caractérisé en ce qu'**un organe de transport du lubrifiant plonge dans le bac collecteur de lubrifiant (21) pour servir de moyen de transport du lubrifiant.

13. Séparateur (1) selon la revendication 12, **caractérisé en ce que** l'organe de transport sert à transporter le lubrifiant à la manière d'un disque racleur, du bac collecteur de lubrifiant (23) à la zone située entre la circonférence intérieure du boîtier (6) et la circonférence extérieure de la broche d'entraînement (3) au-dessus du palier, d'où le lubrifiant s'écoule vers le bas à travers le palier et de là vers le bas pour revenir au bac collecteur de lubrifiant (23).

14. Séparateur (1) selon l'une des revendications précédentes, **caractérisé en ce que** le boîtier (6) s'appuie au moyen d'éléments élastiques (7, 8), de préférence d'éléments en caoutchouc, sur un bâti de machine.

15. Séparateur (1) selon la revendication 14, **caractérisé en ce que** les éléments élastiques (7, 8) répartis sur la circonférence présentent plusieurs dispositions par paires de deux éléments élastiques (7, 8) orientés perpendiculairement l'un à l'autre.

16. Séparateur (1) selon l'une des revendications 14 ou 15, **caractérisé en ce que** les éléments élastiques (7, 8) présentent deux anneaux en caoutchouc qui sont orientés perpendiculairement l'un à l'autre.
